(19) Europäisches Patentamt / European Patent Office / Office européen des brevets

(11) **EP 4 345 399 A1**

(12) **EUROPEAN PATENT APPLICATION**

(43) Date of publication:
**03.04.2024 Bulletin 2024/14**

(21) Application number: **22198281.2**

(22) Date of filing: **28.09.2022**

(51) International Patent Classification (IPC):
**F24S 20/20** (2018.01)   **F24S 80/50** (2018.01)
**F24S 40/55** (2018.01)

(52) Cooperative Patent Classification (CPC):
**F24S 20/20; F24S 40/55; F24S 80/50;** F24S 90/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ETH Zurich
8092 Zürich (CH)**

(72) Inventors:
• **CASATI, Emiliano
  8045 Zürich (CH)**
• **STEINFELD, Aldo
  5200 Brugg (CH)**

(54) **SOLAR RECEIVER FOR HIGH TEMPERATURE APPLICATIONS**

(57) A solar receiver (1, 1a, 1b) comprises an enclosure (2) delimiting a cavity (3) that is configured to receive a heat transfer fluid (4), at least one opening (5) in the enclosure (2) for access of solar radiation (R) into the cavity (3), at least one window (7) that seals the opening (5), and at least one cooling device (8, 8a, 8b) that is configured to cool the window (7). The cooling device (8, 8a, 8b) is configured to supply at least one window-cooling liquid fluid (9) to the window (7), such that the window-cooling liquid fluid (9) forms at least one liquid layer (10) on and/or in the window (7).

FIG. 1

**EP 4 345 399 A1**

**Description**

TECHNICAL FIELD

The present invention relates to a solar receiver according to claim 1, to an industrial system comprising or consisting of such a solar receiver according to claim 8, and to a method of operating a solar receiver according to claim 9.

PRIOR ART

The generation of heat in the sense of thermal energy is responsible for about half the global final energy consumption, significantly more than electricity (20%) and transport (30%)[1]. In turn, 51% of this energy (or 25% of the total) is used to power industrial processes. The related environmental impact due to the emission of greenhouse gases (GHG) is tremendous. Any serious plan to achieve the IPCC climate goals must therefore tackle the challenges related with decarbonizing industrial heat, i.e., reducing or avoiding the related carbon dioxide ($CO_2$) emissions [2, 3]. A formidable difficulty lies in the fact that industrial processes require heat in a wide range of temperature, extending up to approximately 1500 °C. Therefore, decarbonizing the sector involves different challenges and calls for different approaches.

Several key industries require very high-T heat, i.e., exceeding 1000 °C. These are the production of steel, non-ferrous metals (mainly aluminum), chemicals and non-metallic minerals (mainly cement). It has been estimated that the requirement of very high-T heat by these industries accounts for about 1/3 of the total industrial heat [4]. In terms of environmental impact, the cement, steel, aluminum and hydrogen industries are each responsible for approximately 8%, 4%, 1%, and 1% of global greenhouse gases (GHG) emissions, respectively [2, 5].

In particular, global cement production has increased more than 30-fold since 1950 and almost 4-fold since 1990, and this growth is expected to continue. Estimates suggest that 4.3 Gt of cement were produced globally in 2020, with cement production contributing as much as 8% of global $CO_2$ emissions [15].

Only few renewables-based solutions have the potential of delivering heat at temperatures exceeding 1000 °C. A promising pathway is to use concentrated solar (CS) energy to power the above-mentioned processes: this approach is referred to as solarization. Solarization of very high-T processes received a lot of attention in the last decades and is assigned a key role to reduce industrial emissions. However, no CS plant operating at the temperatures of interest here (i.e., >1000 °C) has achieved market maturity.

When the working fluid is different than air and/or when it ought to be pressurized above ambient pressure, high-*T* solar receivers usually feature a windowed aperture for the access of radiation. These windows are critical and troublesome components since they must allow for minimum radiation attenuation while being strong and durable under cycling operation at high temperatures and, possibly, pressures [7, 8, 9] . Windows proposed for high-T solar receivers are typically made of quartz. These have an upper limiting temperature of about 800 °C, which typically requires active cooling and complicates the receiver design. Furthermore, windows exposed to high-flux irradiation should be kept clean and protected from contamination by condensables or dust deposits at all times. In fact, if opaque layers form on the window, its local absorptance increases originating hot spots and eventually causing the window rupture. These complications are further augmented in scaled-up designs [7, 10, 11].

Summarizing, semitransparent windows constitute a critical *single point of failure* for the high-T windowed solar receiver concepts proposed so far, hampering the upscaling potential of these receivers to the multi-MW size.

SUMMARY OF THE INVENTION

It is an object of the present invention to provide a solar receiver that enables applications at high temperatures, in particular at temperatures being higher than 1000 °C, using a window at relatively colder temperatures for the access of solar radiation

This object is achieved with a solar receiver according to claim 1. That is, a solar receiver is provided, wherein the solar receiver comprises an enclosure delimiting a cavity that is configured to receive a heat transfer fluid. At least one opening is provided in the enclosure for access of solar radiation into the cavity. The solar receiver furthermore comprises at least one window that seals the opening and at least one cooling device that is configured to cool the window. The cooling device is configured to supply at least one liquid fluid to the window, called window-cooling liquid fluid, such that the window-cooling liquid fluid forms at least one liquid layer on and/or in the window.

That is, the solar receiver according to the invention comprises a cooling device that is configured to cool the window by supplying at least one window-cooling liquid fluid to the window, such that the window-cooling liquid fluid forms at least one liquid layer on and/or in the window.

The liquid layer being formed on the window is preferably formed on an interior side of the window facing towards the cavity. In other words, the cooling device according to the invention serves the purpose of cooling an inside of the window and/or an interior side of the window. As will be explained in greater detail below, the cooling device is thus preferably arranged at least partially inside the solar receiver.

The window-cooling liquid fluid is understood as a fluid being in its liquid state. In other words, the window-cooling liquid fluid is not in a gaseous state.

Once the window-cooling liquid fluid is supplied to the window, it forms at least one liquid layer on and/or in the window.

Said liquid layer is understood as a layer of fluid that is in its liquid state, i.e. a layer of liquid.

To this end it is conceivable that the liquid layer is a discontinuous liquid layer or a continuous liquid layer. A discontinuous liquid layer is formed by droplets of the window-cooling liquid fluid, for instance. That is, the discontinuous liquid layer can be said to comprise void regions where no window-cooling liquid fluid is present. A continuous liquid layer is understood as a layer of window-cooling liquid fluid that does not comprise any voids or the like.

The liquid layer being formed on and/or in the window preferably cools the window by absorbing energy by combined convection, conduction, and radiation heat transfer from the window.

Said absorption of energy from the window can result in an evaporation of the liquid layer. To this end, different cases are conceivable. For instance, the window-cooling liquid fluid can form a liquid layer, i.e. a layer of liquid, which may not undergo evaporation. However, it is likewise conceivable that the window-cooling liquid fluid forms a liquid layer that undergoes evaporation, wherein at least one layer of a multiphase liquid-vapor mixture is formed. It is even conceivable that the liquid layer entirely evaporates, whereby a vapour layer is formed on and/or in the window.

As will be explained in greater detail further below, the window-cooling liquid fluid is preferably water ($H_2O$) in its liquid state. However, other fluids in their liquid state such as liquid carbon dioxide ($CO_2$) or liquid ammonia ($NH_3$) are likewise conceivable.

Moreover, the window-cooling liquid fluid can at least partially provide the heat transfer fluid. That is, once the window-cooling liquid fluid is supplied to cool the window, it can not only cool the window but also provide at least partially the heat transfer fluid, preferably after being at least partially evaporated. Hence, the heat transfer fluid is preferably in a gaseous state.

However, and as will be explained further below, the window-cooling liquid fluid and the heat transfer fluid can also differ from one another, i.e. the heat transfer fluid can at least partially be provided by a further fluid that does not originate from the window-cooling liquid fluid.

The solar radiation entering the cavity is preferably at least partially absorbed by, causing the heating of, the window-cooling liquid fluid, the heat transfer fluid, a solid absorber, one or multiple conduits, a gas flow entraining solid or liquid particles, or a combination of all or some of the above.

It is furthermore preferred that the heat transfer fluid can flow through a solid absorber. That is, the solar receiver can comprise at least one solid absorber being arranged in the cavity. As such, the solid absorber preferably has a mesh structure or a porous structure such as a porous-foam structure or a porous ceramic structure such as a reticulared porous ceramic (RPC) made of materials resistant to high temperature such as ceramics like alumina, zirconia, ceria or silicon carbide that allow the solar radiation to penetrate into the absorber structure. The heat transfer fluid flows through the absorber structure and, in this way, absorbs the radiation being emitted from the absorber. In this case, the energy is transferred mostly by convection and radiation from the RPC to the fluid. Other absorber structures such as a pipe structure, a graduated lattice structure or any structure that causes a heat transfer from the absorber structure to the heat transfer fluid flowing through the absorber are however likewise conceivable.

Since a liquid layer of window-cooling liquid fluid is formed on and/or in the window, the heat transfer is very effective and the window temperature remains close to the temperature of the window-cooling liquid fluid itself. As such, the temperature of the window can be effectively controlled and kept at very low values.

For instance, in the event of the window-cooling liquid fluid being liquid water, the temperature of the window does not exceed the boiling temperature i.e., 100-120 °C when working at pressures close to ambient. It should be noted however that the solar receiver according to the invention can be operated up to conditions close to the vapor-liquid critical point of the window-cooling liquid fluid (i.e., 374 °C and 220 bar for water).

Moreover, the solar receiver according to the present invention offers a certain degree of passive protection of the window. In fact, if during operation the circulation of the window-cooling liquid fluid is interrupted (e.g., following the failure of a main pump), the window-cooling liquid fluid still present in the solar receiver keeps on absorbing part of the input power and of the reradiated one. This extends the time available for a control system to cut the input power before the solar receiver is damaged. Therefore, the window is effectively protected from high temperatures but also from thermal shocks and fatigue, these last two being the most critical aspects to account for during window design [7, 8, 9] .

Since the window is maintained at low temperatures, the design of the solar receiver is simplified. This allows to:

i) adopt standard design rules and demonstrated solutions (e.g., low temperature seals), reducing and predicting more accurately the failure probability of the window.

ii) design and operate the window under pressures higher than ambient such as up to 20-30 bar, as a consequence of the reduced vulnerability of the window. This has the potential of being an enabling advancement towards the solarization of many industrially relevant processes. In fact, gases and vapors are typically needed at pressures of the order of 20-30 bars: this is the case of steam for industrial thermal uses and hydrogen and syngas for use in distribution networks. Compressing gases and vapors is often technically challenging (e.g., steam) and always expensive, as a consequence of the high energy consumption involved. The solar receiver according to the present invention, on the contrary, allows to pressurize the process by pumping a window-cooling liquid fluid, with an almost negligible energy consumption. Since the solar receiver according to the present invention can vaporize the supplied window-cooling liquid fluid and heat the window-cooling liquid fluid to high temperatures, it allows to: (i) deliver high pressure steam with low energy requirements for pumping in the event that the window-cooling liquid fluid is water and (ii) deliver high pressure gaseous products in case the solar receiver is used to power a solar thermochemical process, see also further below. In particular, the solar receiver according to the present invention can advantageously be used in the production of synthetic solar fuels [30] and of hydrogen from thermolysis of water or ammonia.

Moreover, the fact that a liquid layer is maintained on and/or in the window during operation enables a dramatic reduction of the reradiation losses at high temperature and, consequently, an increase of the thermal efficiency of the solar receiver.

The solar receiver's thermal efficiency $\eta_{th}$, expressed in the following equation, is defined as the fraction of incoming solar energy $Q_{solar}(W)$ that is converted into the sensible heat of a heat transfer fluid denoted $Q_{useful}$. Thus, under steady-state operation, the numerator is the net thermal power transferred to the heat transfer fluid, calculated as the mass flow rate of the fluid $\dot{m}(kgs^{-1})$ times its enthalpy increase across the receiver $\Delta h(kJkg^{-1}K^{-1})$ as

1.

$$\eta_{th} = \frac{Q_{useful}}{Q_{solar}} = \frac{\dot{m}\Delta h}{Q_{solar}} = \frac{\alpha Q_{solar} - Q_{lost}}{Q_{solar}}$$
$$= \alpha - \frac{\varepsilon\sigma T_R^4}{\eta_{SF}E_{DNI}C}.\,(Eq.\,1)$$

In the last equality, $Q_{solar}(W)$ is calculated as the product of the solar field efficiency $\eta_{SF}$, the direct normal solar irradiance $E_{DNI}(W\cdot m^{-2})$ and the concentration ratio C. It is further considered that, at receiver temperatures $T_R > 1000°C$, reradiation losses dominate the overall lost power $Q_{lost}$ and thus the device performance. The quantities $\alpha$ and $\varepsilon$ are the receiver solar absorptance and emittance, respectively, while $\sigma$ is the Stephan-Boltzmann constant.

As its temperature increases, the solar receiver reradiates -i.e., loses to the ambient- an amount of energy which is function of the fourth power of its temperature $T_R$. This strong increase of radiative losses is a main technical factor hampering the development of high-efficiency solar receivers for high $T_R$ values. For instance, the power reradiated by a body at a temperature of 1300 °C is about 10 times larger than when the same body is at 600 °C.

Increasing the thermal efficiency of the solar receiver is paramount to make industrial systems comprising solar receivers such as CS systems operating at $T_R > 1000°C$ techno-economically feasible. This is clarified by the following example. Increasing the solar receiver efficiency threefold, e.g., from 25% to 75% allows to obtain the wanted amount of heat, i.e. $Q_{useful}$, with a less expensive system. If the design output is $Q_{useful} = 100MW$, for instance, a receiver with 25% efficiency requires $Q_{solar} = 400MW$, while one with 75% efficiency only 133$MW$, or about 1/3. Therefore, fixed all other conditions, the more efficient the solar receiver delivers the needed output with approximately 1/3 of the solar field extension required by the solar receiver with 25% efficiency. Since the solar field constitutes the most expensive part of any solar plant, accounting for 50% and more of the installed costs, this has a tremendous impact. In particular, a system with a more efficient solar receiver will be approximately 33% less expensive than the other one.

Furthermore, as liquids have in general more favorable spectral absorption characteristics than their vapors the window-cooling liquid fluid being supplied in the solar receiver according to the present invention achieves higher efficiencies.

Besides, the fact that the solar receiver according to the present invention can realize internally a liquid-vapor transition of the window-cooling liquid fluid makes additional components such as, e.g., boilers superfluous. This simplifies the whole system and reduces its cost.

The cooling device can comprise at least one conduit having at least one orifice for supplying the window-cooling liquid fluid to the window. The orifice is configured to eject the window-cooling liquid fluid along an ejection direction, and wherein an angle being formed between the ejection direction and a normal to the window is between 0° and 90°. More preferably, said angle is between 80° and 90°.

Furthermore, the orifice is preferably configured to eject the window-cooling fluid along an ejection direction that forms an angle with a fictitious line connecting the orifice with a center point of the window being in the range of 0° to 90° such as 45°.

Additionally or alternatively, the orifice is preferably arranged at a distance from the window being in the range of 0 millimeter to 50 millimeter.

That is, the window-cooling liquid fluid can be supplied via at least one conduit that comprises at least one orifice, and wherein the window-cooling liquid fluid is ejected from the conduit through said orifice.

By ejecting the window-cooling liquid fluid through the orifice onto the window, at least one liquid layer is formed on the window.

That is, the window-cooling liquid fluid is preferably supplied to cool the window as a liquid layer. To this end it is preferred to supply an amount of window-cooling liquid fluid that is just enough for the window-cooling liquid fluid to evaporate over the window. In other words, it is preferred to supply the window-cooling liquid fluid such that the liquid layer being formed by the window-cooling liquid fluid evaporates onto or in the vicinity of the window, i.e. that a two-phase layer of liquid-vapor is formed. This is preferably achieved by controlling a flow rate of the window-cooling liquid fluid such that an accumulation of the window-cooling liquid fluid in the cavity is avoided.

Within the context of the present invention the expression "conduit" is understood as a structural element defining an interior space that is configured to convey the window-cooling liquid fluid and/or within which the window-cooling liquid fluid can flow. For instance, the conduit can be a volute around a round window, the frame itself where the facets of a segmented window are arranged, a tube or channel.

The conduit can be arranged outside of the cavity such as within the enclosure only. To this end the one or more orifices can be provided within the enclosure, for instance in a wall of the enclosure. However, it is likewise conceivable that the conduit at least partially protrudes into the cavity, and wherein the one or more orifices are provided on the protruding region of the conduit. It is also conceivable that one or more orifices are arranged outside of the cavity such as within the enclosure and that one or more orifices are provided on a protruding region of the conduit.

It is furthermore preferred that the conduit is in connection with at least one reservoir that comprises the window-cooling liquid fluid. Said reservoir can be part of the solar receiver or an external device that is connectable via connecting means such as a valve to the conduit.

In addition or in the alternative, it is likewise conceivable that the conduit is in connection with and/or part of a fluid circuit. Said fluid circuit is preferably part of an industrial system, see further below.

The orifice is preferably configured to eject the window-cooling liquid fluid along an ejection direction, and wherein an angle being formed between the ejection direction and a normal to the window is preferably between 0° and 90°.

In other words, the orifice is preferably configured to eject the window-cooling liquid fluid along an ejection direction that runs parallel to a (fictitious) plane running through a surface of the window or that runs at an angle to said (fictitious) plane, wherein the angle preferably is 90° or less.

In the former case when the angle being formed between the ejection direction and the normal to the window is 0° or essentially 0° and/or when the ejection direction runs parallel or essentially parallel to the (fictitious) plane running through the surface of the window the window-cooling liquid fluid tends to adhere to the window and to spread over a large region, for instance covering an entire width of the window, whereby a uniform cooling of the window is achieved. In this case it is furthermore preferred that the orifice is arranged laterally from the window.

In the latter case when the angle being formed between the ejection direction and the normal to the window is unequal 0° such as 90° and/or when the ejection direction runs at an angle to the (fictitious) plane running through the surface of the window the window-cooling liquid fluid tends to bounce onto the window or to flow over it as a "rivulet".

The orifice preferably has a diameter in the range of 0.1 millimeter to 20 millimeter, more preferably in the range of 0.1 millimeter to 5 millimeter. In this case it is furthermore preferred that the conduit comprising said orifice has an internal diameter in the range of 10 millimeter to 100 millimeter. However, it should be noted that the preferred sizes of the orifice and of the conduit preferably depend on the size of the solar receiver such that various sizes of the orifice and the conduit are conceivable.

Moreover, the conduit can comprise exactly one orifice or two or more orifices. If two or more orifices are present they can be the same or different from one another. Different orifices could be arranged at different angles with respect to the window or have different diameters, etc.

The cooling device can comprise at least one conduit having at least one nozzle. The nozzle is configured to spray the window-cooling liquid fluid onto the window along a spraying direction, and wherein an angle between the spraying direction and a normal to the window preferably is in the range of +45° to -45°.

Additionally or alternatively, the window preferably defines a characteristic length w, and wherein the nozzle is arranged at a distance d from the window being in the range of $d = \frac{w}{4}$ to d = w, the distance preferably being $d = \frac{w}{2}$.

Hence, in addition or in the alternative to the provision of a conduit comprising at least one orifice mentioned above, the cooling device can comprise a conduit having a nozzle, and wherein the window-cooling liquid fluid is sprayed from the nozzle to the window along a spraying direction.

By spraying the window-cooling liquid fluid onto the window with the nozzle, the at least one liquid layer is formed on the window.

That is, the window-cooling liquid fluid is preferably supplied to cool the window as a spray, wherein an amount of the sprayed window-cooling liquid fluid is preferably just enough for the window-cooling liquid fluid to evaporate over the window. In other words, it is preferred to supply the window-cooling liquid fluid such that the liquid layer being formed by the droplets of window-cooling liquid fluid evaporates onto or in the vicinity of the window, wherein a two-phase layer of liquid vapour is formed. Again in other words, it is preferred that all the droplets of window-cooling liquid fluid reaching the window evaporate.

Said spraying direction preferably encloses an angle with a normal to the window being in the range of +45° to -45°. Said normal to the window preferably runs normal to a (fictitious) plane running through the surface of the window. Hence, an angle between the spraying direction and the (fictitious) plane running through the surface of the window is preferably 45°.

It is furthermore preferred that the nozzle is configured to spray the window-cooling liquid fluid as a cone. It is preferred that a cross-section of the cone preferably corresponds to a cross-section of the window. For instance, in the event of a circular window it is preferred that the cone has a circular cross-section, in the event of a squared window the cone preferably has a squared cross-section, etc. Furthermore, the cone preferably has a cone axis, and wherein said cone axis preferably coincides with a nozzle axis that runs centrally through the nozzle. Moreover, an angle between the cone axis and the normal to the window preferably is in the range of +45° to -45°. Hence, an angle between the cone axis and the (fictitious) plane running through the surface of the window is preferably 45°.

The window preferably defines a characteristic length w, and wherein the nozzle is arranged at a distance d from the window being in the range of $d = \frac{w}{10}$ to d = w. It is particularly preferred that the nozzle is arranged at a distance from the window being $d = \frac{w}{4}$. For instance, in the event that the characteristic length of the window is w = 1000 millimeter, the nozzle is preferably arranged at a distance *d* from the window in the range of 100 millimeter to 1000 millimeter, and preferably at a distance d of 250 millimeter.

For instance, in the event of the window being circular, the characteristic length of the window corresponds to the diameter of the window. In the event of the window being rectangular, the characteristic length of the window preferably corresponds to the diagonal of the rectangle.

The nozzle preferably comprises or consists of at least one metallic compound and/or at least one ceramic compound. It is furthermore preferred that the nozzle exhibits resistance to high temperatures such as temperatures being 1500°C or more, preferably being 2000°C or more. Preferred metallic compounds are stainless still and nickel alloys. Preferred ceramic compounds are silicon carbide and alumina.

The nozzle preferably has a nozzle opening in the range of 0.1 millimeter to 20 millimeter, more preferably in the range of 0.1 millimeter to 5 millimeter. In this case it is furthermore preferred that the conduit comprising said nozzle has an internal diameter in the range of 10 millimeter to 100 millimeter. However, it should be noted here as well that the preferred sizes of the nozzle opening and of the conduit preferably depend on the size of the solar receiver such that various sizes of the nozzle opening and the conduit are conceivable.

The conduit having the nozzle can be arranged outside of the cavity such as within the enclosure or it can at least partially protrude into the cavity. In the former case it is preferred that the nozzle is arranged in a region of the enclosure, for instance in a wall of the enclosure. In the latter case it is preferred that the nozzle is arranged on the protruding part of the conduit.

The conduit comprising the at least one nozzle can be in connection with at least one reservoir that comprises the window-cooling liquid fluid. Said reservoir can be part of the solar receiver or an external device that is connectable via connecting means such as a valve to the conduit. Furthermore, said reservoir can be the same reservoir as the reservoir being in connection with the conduit comprising the orifice in the event that the conduit comprising the orifice is present as well. However, it is likewise conceivable that said reservoir is in addition to the reservoir being in connection with the conduit comprising the orifice or that it is the sole reservoir. In addition or in the alternative, it is likewise conceivable that the conduit is in connection with and/or part of a fluid circuit, and wherein said fluid circuit can be the same fluid circuit mentioned above with respect to the conduit comprising the orifice or a different one.

The cooling device can comprise at least one conduit that extends at least partially within the window and which is configured to supply the window-cooling liquid fluid in the window. Said conduit is preferably at least partially an integral part of the window.

That is, in addition to the conduit comprising the orifice and/or the conduit comprising the nozzle or in the alternative the cooling device can comprise at least one conduit that extends at least partially within the window, and wherein the window-cooling liquid fluid is supplied through said at least one conduit in the window.

By supplying the window-cooling liquid fluid in the window, the at least one liquid layer is formed in the window.

The conduit preferably extends at least partly and preferably entirely through the window. It is furthermore preferred that the conduit extends along an extension direction that runs parallel to a surface of the window onto which the solar radiation impinges. Hence, the conduit preferably extends at least partly and preferably entirely along a width of the window.

The conduit being at least partially an integral part of the window is preferably at least partially formed in the window and/or delimited by the window. In fact, and as will be explained below, the window can be a double-layer window, and wherein the two layers of the window delimit said conduit.

A preferred distance between the layers of the window, i.e. a preferred clear width of the conduit extending at least partially within the window is in the range of 1 millimeter to 10 millimeter. However, it should be noted that the distances or diameters are again preferably based on the size of the solar receiver.

Said conduit extending at least partially within the window can be in connection with the conduit comprising the at least one orifice and/or with the conduit comprising the at least one nozzle.

Moreover, said conduit extending at least partially within the window can be in connection with at least one reservoir that comprises the window-cooling liquid fluid. Said reservoir can be part of the solar receiver or an external device that is connectable via connecting means such as a valve to the conduit. Said reservoir can be the same reservoir as the reservoir being in connection with the conduit comprising the orifice and/or as the reservoir being in connection with the conduit comprising the nozzle. However, it is likewise conceivable that said reservoir is in addition to the reservoir being in connection with the conduit comprising the orifice and/or the reservoir being in connection with the conduit comprising the nozzle or that it is the sole reservoir. In addition or in the alternative, it is likewise conceivable that the conduit is in connection with and/or part of a fluid circuit. Said fluid circuit can be the same fluid circuit as the fluid circuit being in connection with the conduit comprising the orifice and/or the conduit comprising the nozzle or a different one.

Moreover, it is conceivable that the cooling device comprises just the at least one conduit having the at least one orifice for supplying the window-cooling liquid fluid to the window. Alternatively, it is conceivable that the cooling device comprises just the at least one conduit having at least one nozzle for spraying the window-cooling liquid fluid onto the window. Alternatively, it is conceivable that the cooling device comprises just the at least one conduit extending at least partially within the window.

However, it is likewise conceivable that the cooling device comprises a combination thereof. For instance, the cooling device can comprise the conduit having the nozzle as well as the conduit extending at least partially within the window. In this latter case, it is preferred to avoid the evaporation of the window-cooling liquid fluid within the window. As such, it is preferred to heat up the window-cooling liquid fluid while it flows within the window and to thereafter spray said window-cooling liquid fluid from the nozzle onto the window, where it evaporates.

The evaporation of the window-cooling liquid fluid within the solar receiver preferably corresponds to a direct use of the window-cooling liquid fluid within a process such as a thermochemical process taking place within the solar receiver. In this case, the window-cooling liquid fluid can correspond to a working fluid or a reactant fluid, see also further below.

However, it is likewise conceivable that the window-cooling liquid fluid is not directly used within a process such as a thermochemical process taking place within the solar receiver but in a process taking place outside of the solar receiver. For instance, the solar receiver can be in connection with a downstream device, and wherein the window-cooling liquid fluid transfers from the solar receiver to said downstream device, see further below. In this case it is preferred that the cooling device comprises the at least one conduit extending at least partially within the window, and wherein the window-cooling liquid fluid forming the liquid layer and flowing in the window is heated up but not evaporated.

The window preferably consists of any material with high transmittance to solar radiation in the visible spectral range. Said window can be a single-layer window or a multi-layer window. Additionally or alternatively, the window can be at least partially gastight and/or at least partially gas-permeable. Additionally or alternatively, the window can comprise or consist of glass, quartz, sapphire or plastic.

That is, the window can be a single-layer window or a multi-layer window such as a double-layer window mentioned earlier.

In the event of the window being a multi-layer window and the cooling device comprising the conduit comprising the at least one nozzle the liquid layer of the window-cooling liquid fluid is preferably formed on a surface of an innermost layer of the window that faces towards the cavity. In the event of the window being a multi-layer window and the cooling device comprising the conduit with the at least one orifice the liquid layer of the window-cooling liquid fluid is preferably formed on an inner surface of an outermost layer of the window and more preferably on any surface of the layers apart from an outermost surface of the layer that faces towards an outside of the cavity. In the event that the window is a single-layer window and the cooling device comprising the conduit with the at least one orifice and/or the conduit comprising the at least one nozzle the liquid layer of the window-cooling liquid fluid is preferably formed on a surface of said single-layer window that faces towards the cavity. These surfaces facing towards the cavity can be seen as inner surfaces of the window.

In the event of a multi-layer window comprising three or more layers and the cooling device comprising at least one conduit extending at least partially within the window it is conceivable that only two of the layers of the window form or delimit a single conduit or that three or more of the layers form or delimit two or more conduits. That is, the multi-layer window can comprise two or more conduits that extend within the window.

It is furthermore preferred that the window is at least partially gastight and/or at least partially gas-permeable, preferably always maintaining high transmittance to solar radiation in the visible spectral range. The window in the region of its gas-permeability is preferably porous. It is furthermore preferred that the window is at least partially gas-permeable such as porous in the event of the window being a multi-layer window. In this case it is preferred that the outermost layer facing towards an outside of the cavity is gastight and wherein one or more of the inner layers facing are gas-permeable. The pores of the window are preferably configured such as to allow any vapour being formed upon the evaporation of the liquid layer to escape into the cavity whereas part of the liquid layer remains between the layers of the window.

In any case it is preferred that the window comprises or consists of any material with high transmittance to solar radiation in the visible spectral range. This means that the window allows the passage of solar radiation absorbing the lowest possible amount of its energy. The property of interest is the material absorptance averaged over the solar spectrum.

It is furthermore preferred that the window comprises any material well-known in the state of the art like quartz, sapphire or plastic. A porous window can be manufactured starting from any of the just-mentioned materials.

The window can be flat or curved. That is, the window can comprise an outer surface facing towards an outside of the cavity and/or one or more inner surfaces facing towards an inside of the cavity that are flat or curved. A flat window or flat surface is understood as not being curved.

The solar receiver can comprise at least one further conduit for supplying at least one further fluid into the cavity. Said further fluid preferably at least partially provides the heat transfer fluid.

That is, the solar receiver can comprise at least one further conduit in addition to the one or more conduits of the cooling device, wherein said further conduit serves the purpose of supplying at least one further fluid into the cavity. Said further fluid preferably at least partially provides the heat transfer fluid.

Hence, it is conceivable that said further fluid entirely provides the heat transfer fluid, wherein the window-cooling liquid fluid does not become the heat transfer fluid e.g. because it does not evaporate. It is however likewise conceivable that both, the window-cooling liquid fluid being supplied by the cooling device as well as the further fluid being supplied by the further conduit provide the heat transfer fluid. It is furthermore conceivable that no further fluid (and thus no further conduit) are present, and wherein only the window-cooling liquid fluid being supplied by the cooling device provides the heat transfer fluid.

Said further fluid when being supplied into the cavity can be in its gaseous phase or in its liquid phase.

The further conduit is preferably arranged at least partially in the cavity. However, it is likewise conceivable that the further conduit terminates in a nozzle or orifice or the like that is located in the enclosure and through which nozzle or orifice the further fluid can be ejected into the cavity.

That is, the enclosure of the solar receiver preferably extends along a longitudinal direction. The window is preferably arranged at a first end of the enclosure and one or more outlets via which the heat transfer fluid exits the cavity is preferably arranged at a second end of the enclosure being opposite to the first end of the enclosure. However, it should be noted that the outlets can also be arranged elsewhere in the solar receiver, for instance on the sides of the enclosure.

The conduit comprising the at least one orifice, at least in the region of the orifice, is preferably arranged in the region of the first end of the enclosure, i.e. in the region of the window.

The conduit comprising the at least one nozzle, at least in the region of the nozzle, is preferably arranged between the first end and the second end of the enclosure such as in an intermediate region of the enclosure. Additionally or alternatively, the conduit comprising the at least one nozzle, at least in the region of the nozzle, is preferably arranged between the window and the second end of the enclosure with respect to the longitudinal direction of the enclosure.

If present, the absorber is preferably arranged in a region of the second end of the enclosure.

In the event that a further conduit for supplying a further fluid is present it is preferred that said further conduit is arranged between the window and the second end of the enclosure with respect to the longitudinal direction of the enclosure.

In another aspect, an industrial system comprising or consisting of at least one solar receiver as described above is provided. The industrial system preferably is or comprises or consists of a processing system, a chemical reactor or a heat engine.

That is, the solar receiver according to the invention is preferably part of an industrial system or forms the industrial system. The industrial system can be or comprises a processing system, a heat engine or a chemical reactor, for instance.

In the event of the industrial system being a processing system, it is preferred that the heat transfer fluid acts as a heat transfer fluid in a process being carried out in the processing system. For instance, the processing system can be configured for producing fuels, cement, metals, or metallic compounds, and wherein the heat transfer fluid contributes or even provides the thermal energy required for said productions. That is, the heat transfer fluid preferably provides a heat transfer fluid in a thermochemical process. In this case it is preferred that the solar receiver is in connection with a downstream device such as a chemical reactor for the production of fuels, cement, metals, and other energy-intensive chemical commodities, and wherein the heated heat transfer fluid is allowed to flow from the solar receiver to said downstream device.

As an example, the downstream device can be a fuel-synthesis unit that is configured to reformulate the products of reactions happening in the solar receiver acting as a reactor into the wanted fuel. For instance, the downstream device could be a Fisher Tropsch system that is configured to convert syngas mainly constituted by $H_2$ and CO into liquid fuels such as kerosene. Another example is a rotary kiln as those commonly used in the production of cement at large scale.

In the event of the industrial system being a heat engine, it is preferred that the heat transfer fluid acts as a working fluid or that the heat transfer fluid delivers heat to the working fluid. In this case it is preferred that the solar receiver is in connection with a downstream device in the form of a heat engine, and wherein the heated heat transfer fluid is allowed to flow from the solar receiver to said downstream device.

In the event of the industrial system being a chemical reactor, it is preferred that the heat transfer fluid acts as a reactant fluid that undergoes a chemical reaction and/or a chemical transformation. In this case it is furthermore preferred that the solar receiver itself provides the chemical reactor, i.e. that the solar receiver forms the industrial system, wherein the cavity of the solar receiver is a chemical reaction chamber in which the heat transfer fluid undergoes the chemical reaction and/or the chemical transformation. However, it is likewise conceivable that the solar receiver is in connection with a downstream device in the form of a chemical reactor, and wherein a chemical reaction or chemical transformation occurs in said downstream chemical reactor.

Moreover, the solar receiver can be deployed as a direct integration or an indirect integration. In the direct integration, the solar receiver provides the reactor or the like. In the indirect integration, the solar receiver is connected to a reactor or the like that is separated from the solar receiver. Said reactor or the like preferably is a standard piece of equipment of industrial systems being well-known in the art. In this respect it is particularly preferred that the solar receiver is in connection with a downstream device such as a thermal energy storage (TES) subsystem, wherein the heat transfer fluid or other fluids (see below) exiting the solar receiver transfer energy that can be stored in the TES for subsequent use.

Any statements made herein regarding the solar receiver per se preferably likewise apply to the industrial system comprising or consisting of the solar receiver and vice versa.

In another aspect, a method of operating a solar receiver as described above is provided. The method comprises the step of supplying at least one window-cooling liquid fluid to the window with the cooling device such, that the window-cooling liquid fluid forms at least one liquid layer on and/or in the window.

Any statements made herein regarding the solar receiver preferably likewise apply to the method of operating the solar receiver and vice versa.

The heat transfer fluid can be a reactant fluid that undergoes a chemical reaction and/or a chemical transformation. Said chemical reaction or chemical transformation preferably occurs within the cavity of the solar receiver. The chemical transformation preferably is a thermal dissociation. Alternatively, the heat transfer fluid can be a heat transfer fluid in a thermochemical process. The thermochemical process preferably is an endothermic step in the production of fuels, cement, metals, or metallic compounds. Alternatively, the heat transfer fluid can be a working fluid for a heat engine or can deliver heat to the working fluid.

The window-cooling liquid fluid can at least partially provide the heat transfer fluid.

As mentioned earlier, the window-cooling liquid fluid being provided by the cooling device can act as the heat transfer fluid. For instance, in the event of the window-cooling liquid fluid being liquid water, said liquid water can at least partially evaporate and form gaseous water, i.e. steam. Said steam can then serve the purpose of the heat transfer fluid that furthermore acts as a heat transfer fluid in a thermochemical process or as a working fluid for a heat engine or as a reactant fluid that undergoes a chemical transformation such as a thermal dissociation into $2H_2O \rightarrow 2H_2 + O_2$ for example.

At least one further fluid can be supplied into the cavity via the at least one further conduit. The further fluid can at least partially provide the heat transfer fluid. Moreover, the window-cooling liquid fluid and the further fluid can be the same or different from one another.

That is, in addition or in the alternative to the window-cooling liquid fluid providing the heat transfer fluid, the heat transfer fluid can be provided by a further fluid.

Hence, a further fluid can be supplied into the cavity, and wherein said further fluid can act as the heat transfer fluid. Said heat transfer fluid being provided by the further fluid preferably acts as a heat transfer fluid, as a working fluid or as a reactant fluid as mentioned earlier.

Moreover, the further fluid can be the same as the window-cooling liquid fluid. For instance, the further fluid can be liquid or gaseous water and the window-cooling liquid fluid is liquid water. However, it is likewise conceivable that the further fluid and the window-cooling liquid fluid differ from one another. For instance, the further fluid can be

$CO_2$, $NH_3$, $CH_4$ or combinations thereof, whereas the window-cooling liquid fluid is liquid water.

A mass flow rate of the window-cooling liquid fluid being supplied by the cooling device is preferably adjusted to match an input solar power. The mass flow rate is directly related to a size of the industrial system and the window-cooling liquid fluid considered.

The window-cooling liquid fluid and/or the further fluid and/or the heat transfer fluid can have higher transmittance to solar radiation in the visible spectral range than transmittance to longer wavelength, e.g. infrared radiation. In other terms, it can present characteristics of spectral selectivity to the absorption of radiation. This is the case of well known fluids in the art like water and $CO_2$, both in their liquid and gaseous state. This is in contrast to a fluid being transparent to thermal radiation, wherein no absorption by the fluid takes place. More preferably, the window-cooling liquid fluid and/or the further fluid and/or the heat transfer fluid are transparent to thermal radiation with a high transmittance to solar radiation in the visible spectral range while having lower transmittance to solar radiation of longer wavelengths such as in the infrared spectral range. The window-cooling liquid fluid and/or the further fluid and/or the heat transfer fluid comprise or consist of water, $CO_2$, $NH_3$, $CH_4$, or combinations thereof. To this end it is noted that the window-cooling liquid fluid and/or the further fluid and/or the heat transfer fluid can furthermore comprise one or more additional components such as a dispersed solid inside and thus be a slurry or comprising another gas, etc.

A negative pressure or a positive pressure can be generated in the cavity. Additionally or alternatively, a pressure inside the cavity can be in the range of 0.01 bar absolute to 100 bar absolute.

That is, the solar receiver, in particular its cavity, is preferably applicable at high pressures and/or at vacuum pressure. For instance, the cavity can be connected to a source of underpressure such as a vacuum pump that evacuates the cavity and generates vacuum pressure within the cavity. The cavity can also be connected to a source of overpressure that generates an overpressure in the cavity. Or, the cavity can constitute a source of over pressure for instance in the event that the window-cooling liquid fluid evaporates and/or upon the supply of the further fluid into the cavity.

The window-cooling liquid fluid and/or the further fluid and/or the heat transfer fluid can be heated up to 1500 °C or more, preferably up to 2000 °C or more within the cavity by the solar radiation.

That is, due to the cooling of the window by the cooling device the solar receiver according to the invention allows a heating of the fluids up to 1500 °C or more, preferably up to 2000 °C or more within the cavity by the solar radiation.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows a sectional view of a solar receiver according to a first embodiment;
Fig. 2a    shows a partial sectional view of a window and cooling device of the solar receiver according to figure 1;
Fig. 2b    shows a top view of the window and the cooling device of figure 2a;
Fig. 3     shows a sectional view of a solar receiver according to a second embodiment;
Fig. 4     shows a partial sectional view of a window and a cooling device of the solar receiver according to figure 3;
Fig. 5     shows a sectional view of a solar receiver according to a third embodiment;
Fig. 6     shows a graph depicting state points representing a isobaric heating process of water at 1 bar as realized in the solar receiver according to the invention;
Fig. 7     shows a graph depicting the normalized spectral emissive power of the sun (black solid line) and of a blackbody at 1200 °C (black dashed line) on the left y-axis. The graph furthermore depicts the absorption coefficient of liquid water (gray line), right y-axis (log scale). The abscissae are the radiation wavelength;
Fig. 8     shows a diagram of the thermal efficiency of experimentally demonstrated solar receivers as a function of fluid outlet temperature, wherein the concentration ratio C is given in parenthesis;
Fig. 9     shows a possible integration of the present invention into the process of cement production to avoid $CO_2$ emissions altogether with in-situ sequestration.

DESCRIPTION OF PREFERRED EMBODIMENTS

Various aspects of the solar receivers according to the invention shall now be illustrated with reference to the figures.

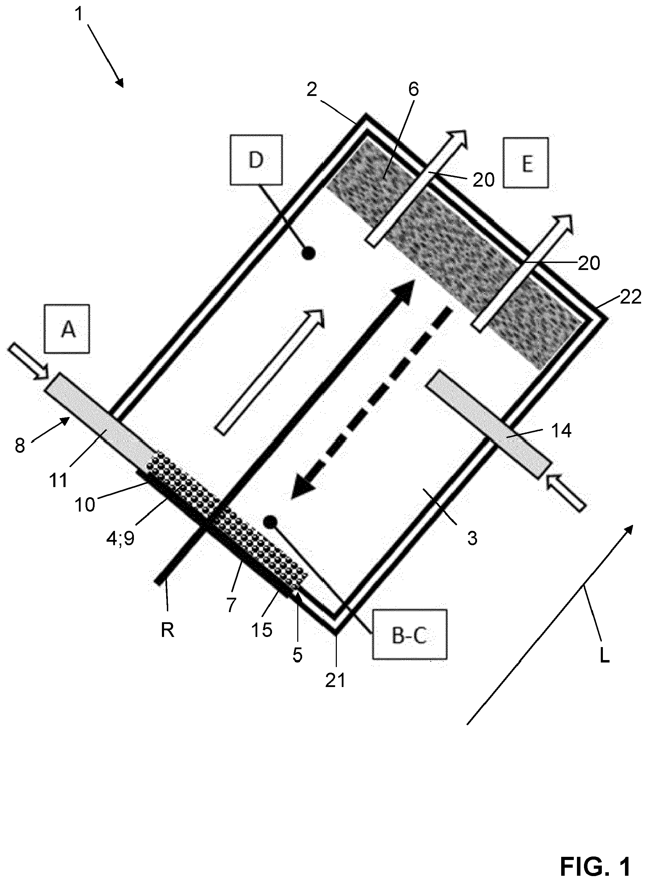

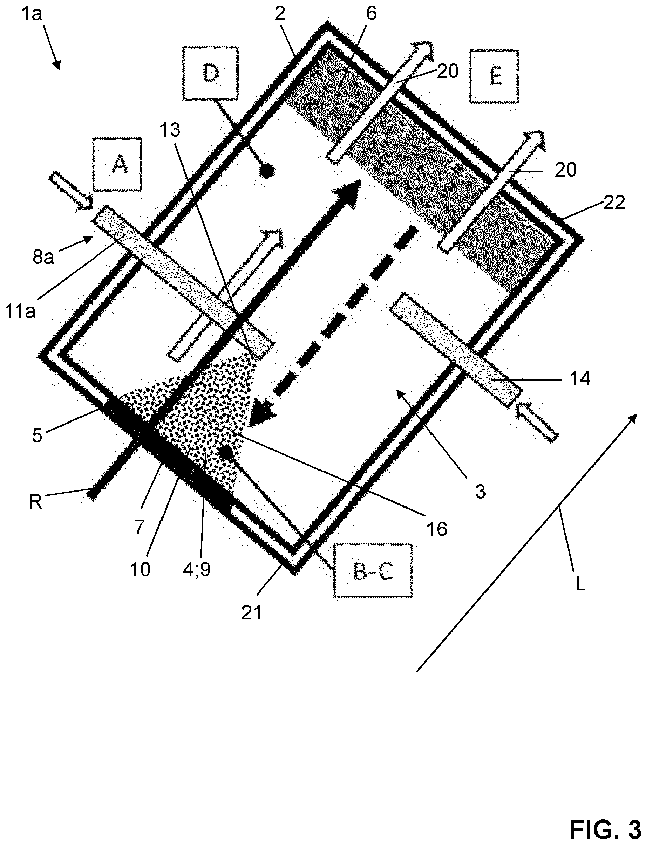

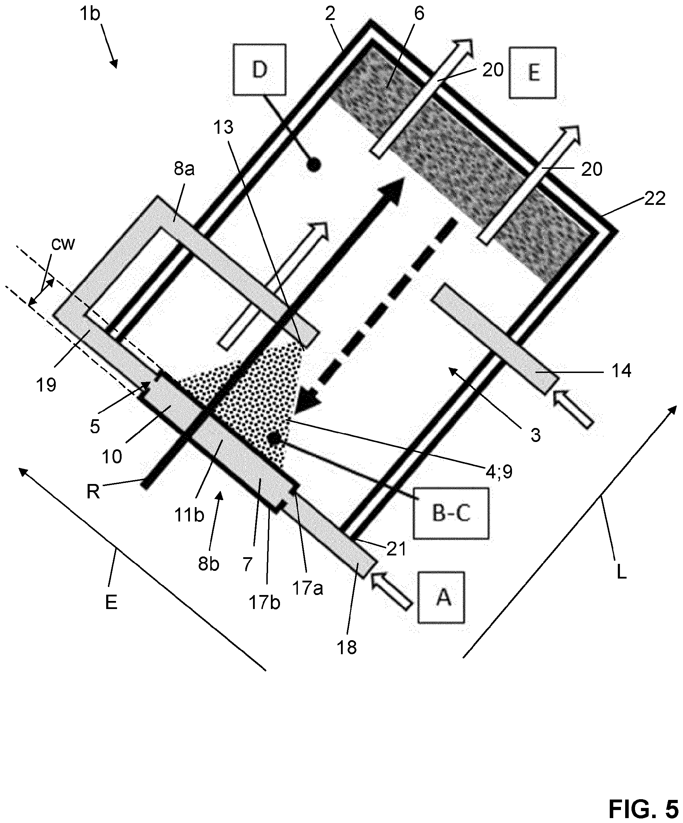

Figures 1, 3 and 5 depict solar receivers 1, 1a, 1b according to the invention. These solar receivers 1, 1a, 1b comprise in each case an enclosure 2 delimiting a cavity 3 within which a heat transfer fluid 4 is received. The enclosure 2 furthermore comprises an opening 5 that is sealed with a window 7 towards an outside. Said window has high transmittance to solar radiation in the visible spectral range. Said opening 5 allows solar radiation impinging on the window 7 to enter into the cavity 3. An absorber 6 is arranged in the cavity, wherein the absorber is configured to absorb solar radiation within the cavity and to convert the absorbed solar radiation to thermal energy, whereby the heat transfer fluid 4 being received in the cavity 3 is heated. The solar receivers 1, 1a, 1b furthermore comprise in each case a cooling device 8, 8a, 8b that is configured to cool the window 7 by supplying a window-cooling liquid fluid 9 to the window 7 that cools the window 7 by forming a liquid layer 10. The solar receivers 1, 1a, 1b essentially differ from one another in the design of their cooling devices 8, 8a, 8b and their windows 7. Namely, the window 7 can be a single-layer window as being present in the solar receivers 1, 1a of figures 1 and 3 or a multi-layer window, here a double-layer window, as being present in the solar receiver 1b of figure 5. The different cooling devices 8, 8a, 8b are now discussed individually with reference to the particular figures.

In fact, figure 1 depicts a solar receiver 1 comprising a cooling device 8 that is configured to supply window-cooling liquid fluid 9 to the window 7 such, that the window-cooling liquid fluid 9 forms a liquid layer 10 on the window 7. Said liquid layer 10 is formed on the window 7 on an interior side 15 of the window 7 facing towards the cavity 3. The liquid layer 10 formed on the window 7 cools the window 7 by absorbing energy by combined convection, conduction, and radiation heat transfer from the window 7.

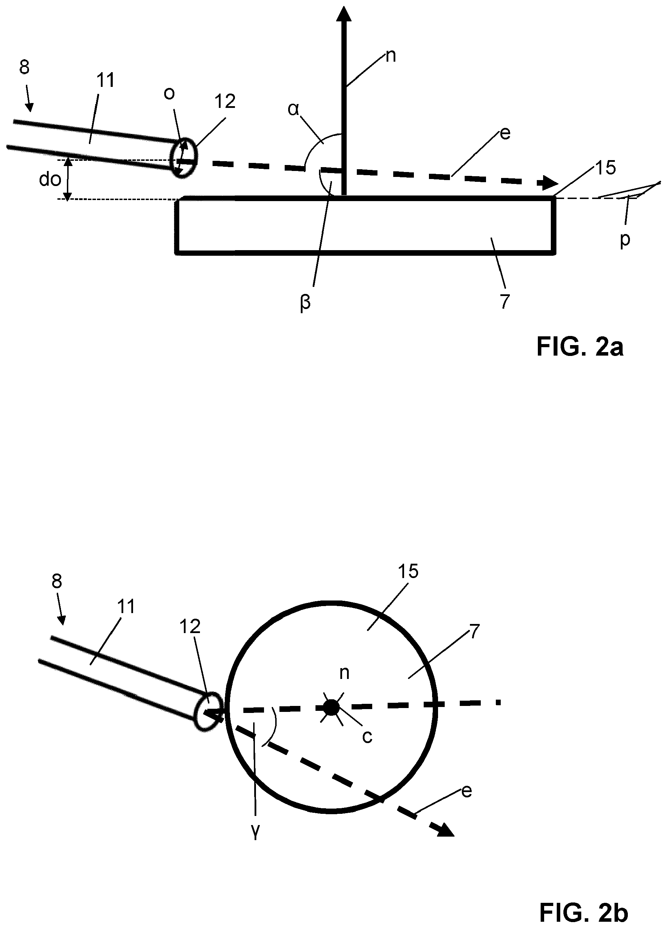

The cooling device 8 comprises a conduit 11 in the form of a tube that has an orifice 12 for supplying the window-cooling liquid fluid 9 flowing within the conduit 11 to the window 7, see figures 2a and 2b. As indicated in the schematics depicted in figures 2a and 2b, said orifice 12 is arranged in a wall of the conduit 11. It should be noted that various arrangements of the orifice are conceivable. For instance, the conduit 11 can be provided as a tube that extends around the window and which comprises a plurality of orifices along its length forming a circular array of orifices, for instance. Window-cooling liquid fluid 9 that flows along the conduit 11 is ejected from the conduit 11 through the orifice 12 and along an ejection direction e. In the depicted example, the window 7 corresponds to a flat and circular window that is depicted from the top in figure 2b and from the side in figure 2a. Here, the orifice 12 is arranged and configured such that it ejects the window-cooling liquid fluid 9 along an ejection direction e, and wherein an angle $\alpha$ being formed between the ejection direction e and a normal n to the window is about 80°, see figure 2a. In other words, the orifice 12 is arranged and configured to eject the window-cooling liquid fluid 9 along the ejection direction e that runs here at an angle $\beta$ of 10° to a (fictitious) plane p running through a surface the interior side 15 of the window 7. Moreover, and as follows from figure 2b, the orifice 12 can furthermore be arranged and configured such that the ejection of the window-cooling liquid fluid 9 is along an ejection direction e that forms an angle $\gamma$ with a fictitious line connecting the orifice 7 with a center point c of the window 7 that can take several values, for instance $\gamma = 0°$ and thus constituting a radial ejection of the window-cooling liquid fluid or $\gamma = 90°$ and thus constituting a peripheral or tangential ejection or, as depicted, values in between such as $\gamma = 45°$. In addition, and as indicated in figure 2a, the orifice 12 preferably has a diameter o in the range of 0.1 millimeter to 20 millimeter. Moreover, the orifice is arranged at a distance do from the window 7 being in the range of 0 millimeter to 50 millimeter.

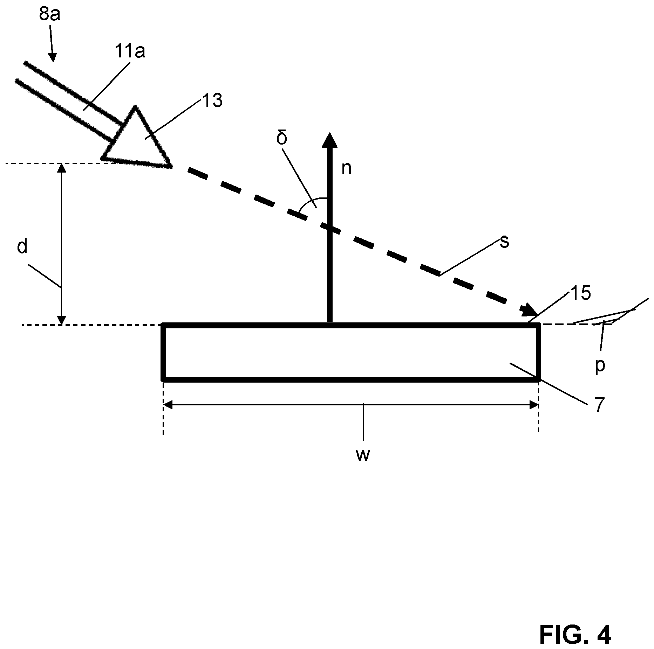

Figure 3 depicts a solar receiver 1a comprising a cooling device 8a that comprises a conduit 11a having a nozzle 13. The nozzle 13 is configured to spray the window-cooling liquid fluid 9 as a cone 16 onto the window 7. Moreover, and as indicated in figure 4, the nozzle is arranged and configured such that an angle $\delta$ between a spraying direction s along which the window-cooling liquid fluid 9 is sprayed from the nozzle 13 and a normal n to the window 7 is about +45°. Said normal n to the window 7 again runs normal to a (fictitious) plane p running through the surface of the interior side 15 of the window 7. By spraying the window-cooling liquid fluid 9 onto the window 7 with the nozzle 13, the liquid layer 10 is formed on the window 7, in particular on the interior side 15 of the window 7. As furthermore follows from figure 4, the window 7 defines a characteristic length w, and wherein the nozzle 13 is arranged at a distance d from the window 7 being in the range of $d = \dfrac{w}{4}$ to d = w.

Figure 5 depicts a solar receiver 1b comprising a cooling device 8b that comprises a conduit 11b that extends within the window 7, in particular between two layers 17a, 17b of the double-layer window 7 mentioned initially. The conduit 11b within the window 7 is configured to supply the window-cooling liquid fluid 9 in the window 7, whereby the window-cooling liquid fluid 9 forms the liquid layer 10 in the window 7. Here, the conduit 11b within the window 7 is delimited by the two layers 17a, 17b of the window 7. Hence, the conduit 11b in the region of the window 7 is an integral part of the window 7. Moreover, a distance between the layers 17a, 17b of the window define a clear width cw of the conduit 11b.

As furthermore follows from figure 5, the conduit 11b comprises regions outside of the window. In particular, the conduit 11b comprises an inlet region 18 via which the window-cooling liquid fluid 9 is supplied into the window 7 and an outlet region 19 via which the window-cooling liquid fluid 9 flows out of the window 7. Said inlet region 18 and outlet region 19 can be provided as separate components that are connected to the conduit 11b within the window 7 or these components can be a single-piece element. The conduit 11b extends along an extension direction E that runs parallel to the window 7 onto which the solar radiation impinges.

In the depicted example the conduit 11b extending within the window 7 is in connection with the conduit 11a comprising the nozzle 13 via the outlet region 19. As a result, the window-cooling liquid fluid 9 is first supplied to into the window 7 via inlet region 18, then flows within the window 7 via the conduit 11b, then flows out of the window 7 and into the outlet region 19, and thereafter flows within the conduit 11a to the nozzle 13 from which it is ultimately sprayed onto the window 7.

Although not depicted, the conduits 11, 11a, 11b of the cooling devices 8, 8a, 8b and including any other regions such as the inlet region 18 and outlet region 19 can be in connection with one or more reservoirs comprising the window-cooling liquid fluid and/or with one or more fluid circuits of an industrial system, for instance.

Especially in the solar receivers 1, 1a discussed above with reference to figures 1 to 3 the window-cooling liquid fluid 9 can at least partially provide the heat transfer fluid 4. That is, once the window-cooling liquid fluid 9 is supplied to the window 7 it can not only cool the window 7 but also become the heat transfer fluid 4 preferably after being at least partially evaporated.

However, the window-cooling liquid fluid 9 and the heat transfer fluid 4 can also differ from one another, i.e. the heat transfer fluid 4 can at least partially be provided by a further fluid that does not originate from the window-cooling liquid fluid 9. In fact, and as follows from figures 1, 3 and 5, the solar receivers 1, 1a, 1b can in each case comprise at least one further conduit 14 for supplying at least one further fluid into the cavity 3, and wherein said further fluid at least partially provides the heat transfer fluid 4.

Said further conduit 14 is arranged between the window 7 and the absorber 6 with respect to a longitudinal direction L of the enclosure 2 and in the depicted examples protrudes from an outside of the cavity 3 partially into the cavity 3. Moreover, in the depicted examples the window 7 is arranged at a first end 21 of the enclosure 2 and outlets 20 via which the heat transfer fluid 4 exits the cavity 3 are arranged at a second end 22 of the enclosure 2 being opposite to the first end 21 of the enclosure 2. The longitudinal direction L of the enclosure 2 extends from the first end 21 of the enclosure 2 to the second end 22 of the enclosure 2. Moreover, and as follows from figure 1, the conduit 11 comprising the orifice 12, at least in the region of the orifice 12, is arranged in the region of the first end 21 of the enclosure 2 and thus in the region of the window 7. As follows from figure 3, the conduit 11a comprising the nozzle 13, at least in the region of the nozzle 13, is arranged in an intermediate region of the enclosure 2 being formed between the first end 21 and the second end 22 of the enclosure 2. As follows from figure 5, the conduit 11b of the solar receiver 1b is arranged in the first end of the enclosure 21 and merges into the conduit 11a being arranged in the intermediate region of the enclosure 2. All depicted solar receivers 1, 1a, 1b comprise the absorber being arranged in a region of the second end 22 of the enclosure.

Due to the cooling of the window 7 by the cooling devices 8, 8a, 8b the solar receivers 1, 1a, 1b according to the invention allow a heating of the window-cooling liquid fluid 9 and/or the further fluid and/or the heat transfer fluid 4 up to 1500 °C or more, such as up to 2000 °C or more within the cavity 3 by the solar radiation.

That is, the solar receivers 1, 1a, 1b according to the invention are high temperature solar receivers delivering heat in the form of gas and/or superheated vapor and/or combinations thereof at temperatures up to 1500°C or more with $\eta_{th}$ > 60% while protecting the window from hazardously high temperatures.

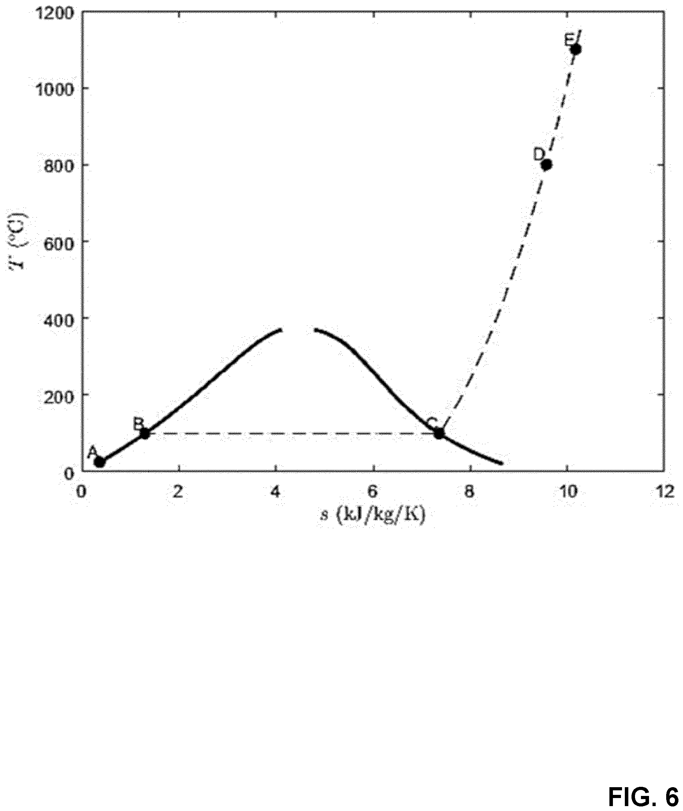

Further aspects of the solar receivers 1, 1a, 1b according to the invention and their comparison with solar receivers of the state of the art will now be discussed with reference to figures 6 to 9.

Figure 6 shows a graph depicting state points representing isobaric heating process of water at 1 bar as realized in the solar receivers 1, 1a, 1b according to the invention and reported in the temperature-specific entropy chart of water since water was used as the window-cooling liquid fluid 9 for cooling the window 7 as well as the heat transfer fluid 4. The state points A to E are indicated in the solar receivers 1, 1a, 1b of figures 1, 3 and 5, respectively. The solid curve encloses the liquid-vapor coexistence region, while the dashed curve is the isobaric line at 1 bar.

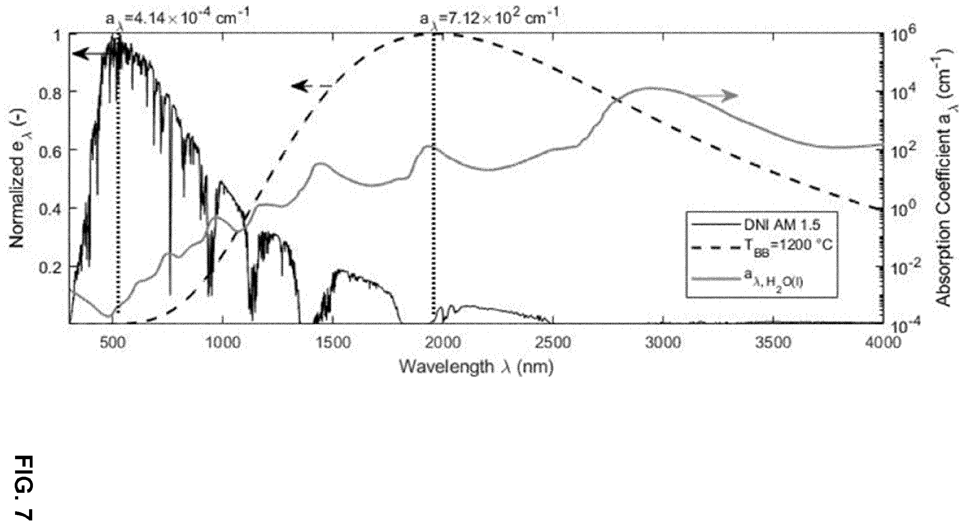

Since a preferred window-cooling liquid fluid 9 used to cool the window 7 and/or used as a heat transfer fluid 4 in the solar receivers 1, 1a, 1b according to the invention is water, the spectral selectivity of liquid water was exploited. With reference to figure 7 it can be seen that the absorption coefficient of liquid water is about $4 \cdot 10^{-4} cm^{-1}$ at a wavelength of around 500 nm, where the solar spectrum peaks. This means that the average penetration length for a 500 nm photon, or the reciprocal of $\alpha$, is about 24 m. In other words, liquid water absorbs a relatively limited amount of electromagnetic radiation in the spectral range corresponding to the visible wavelength, i.e., the spectral window containing most of the solar power, letting most of the incoming radiation through. To give a figure, 10 mm of liquid water will absorb approximately 20% of the incoming solar radiation. Conversely, water tends to be much more opaque towards radiation at longer wavelengths. As shown in figure 7, its absorption coefficient is about $7 \cdot 10^2 cm^{-1}$ at a wavelength of around 2000 nm, where the blackbody emission at 1200 °C peaks, i.e., approximately 6 orders of magnitude larger than in the previous case. Consistently, the average penetration length of a 2000 nm photon is about 0.01 mm, and 10 mm of liquid water will absorb approximately 98% of the thermal radiation emitted by a 1200 °C blackbody.

Following the fate of a bundle of rays of direct solar radiation, i.e., rays which travelled undisturbed from a star to the Earth's surface without being scattered (e.g., by aerosols) nor absorbed (e.g., by clouds). Part of these rays will hit the surface of a heliostat, being reflected towards the solar receiver 1, 1a, 1b according to the invention. The radiation impinging onto the window 7 of the solar receiver 1, 1a, 1b, labeled as $\dot{Q}_{solar}(W)$, is the energy input used to evaluate efficiency according to Equation 1 noted in the general specification. Part of this radiation such as about 5-10% will be lost for reflection in and absorption by the window itself. Most of $\dot{Q}_{solar}$ will cross the window 7 entering the cavity 3 and will travel through the liquid layer 10 of water being formed on and/or in the window 7. Part of the radiation will be absorbed by this liquid layer 10 of water, depending on its depth. This energy causes the water to heat up until the saturation temperature at the operation pressure is reached (e.g., 100 °C at 1 atm for water). Further heating results in evaporation, i.e., the water changes phase to saturated steam. This overall process corresponds to the evolution from point A to point C in figures 1, 3 and 5. The phase transition may evolve through a vigorous pool boiling process, which allows the formation of a boiling layer covering the whole window also when the receiver is tilted. In this case, the presence of bubbles tends to reduce the absorption of radiation compared to a single-phase water layer. In case of finely atomized water (drops diameter around 50 μm), the evaporation may occur without the formation of bubbles [12]. The radiation emerging from the window-cooling liquid fluid will then travel through a layer formed by the evolving steam, where another relatively small fraction is absorbed, being steam an absorbing gas. This absorption causes the steam to heat up, i.e., commences the steam superheating (process C to D). As such, the solar receivers 1, 1a, 1b according to the invention can be seen as multi-phase solar receivers.

The remaining fraction of $\dot{Q}_{solar}$ will finally impinge onto the walls of the cavity, i.e. the enclosure 2, or the porous absorber and being mostly absorbed therein. In the event of the absorber 6 being a porous structure with high absorptance (90% or higher) such as, e.g., a reticulated porous ceramic (RPC) made of silicon carbide (SiC), the absorption of radiation causes heating up of the RPC to the target temperatures exceeding 1000 °C. A significative amount of energy is reradiated by the RPC when it reaches these temperatures (dotted arrows in figures 1, 3 and 5). This reradiation is almost completely absorbed by the layer 10 of liquid water, in virtue of its relatively high absorption coefficient at these wavelengths. This makes the present invention a spectrally-selective solar receiver 1, 1a, 1b.

The absorption of reradiation increases the power input to the water, in turn increasing the amount of evaporated steam. The whole evolving steam thus passes through the absorber 6 in the form of porous RPC where it reaches the RPC temperature almost immediately (i.e., within less than 1 mm of penetration) given the highly efficient convective heat transfer mechanism in the RPC structure (process D to E).

During normal operation, the mass flow rate of the liquid water 9 is adjusted to match the input power in order to control the liquid level inside the solar receiver 1, 1a, 1b. The fact that most of the energy reradiated by the absorber is "captured" by the liquid water causes a drastic reduction of the main loss mechanism affecting high-T solar receivers, i.e., reradiation losses. This allows to maintain the demonstrated high thermal efficiencies also at the high temperatures of interest here.

The prototype solar receivers 1, 1a, 1b of the present invention demonstrated under laboratory conditions the possibility of exceeding the value of $\eta_{th}$ = 50% at steam temperatures above 1400°C. During this test, a mass flow rate of about 0.3 $g/s$ of window-cooling liquid fluid 9 in the form of liquid water at about 20°C was fed and the radiative input power $Q_{solar}$ (provided by the ETH high flux solar simulator) was equal to 2950 W, corresponding to a concentration ratio of about 1850 suns.

The following table collects a selection of R&D results in the field of high-T solar receivers [16], together with the preliminary laboratory results for the present invention.

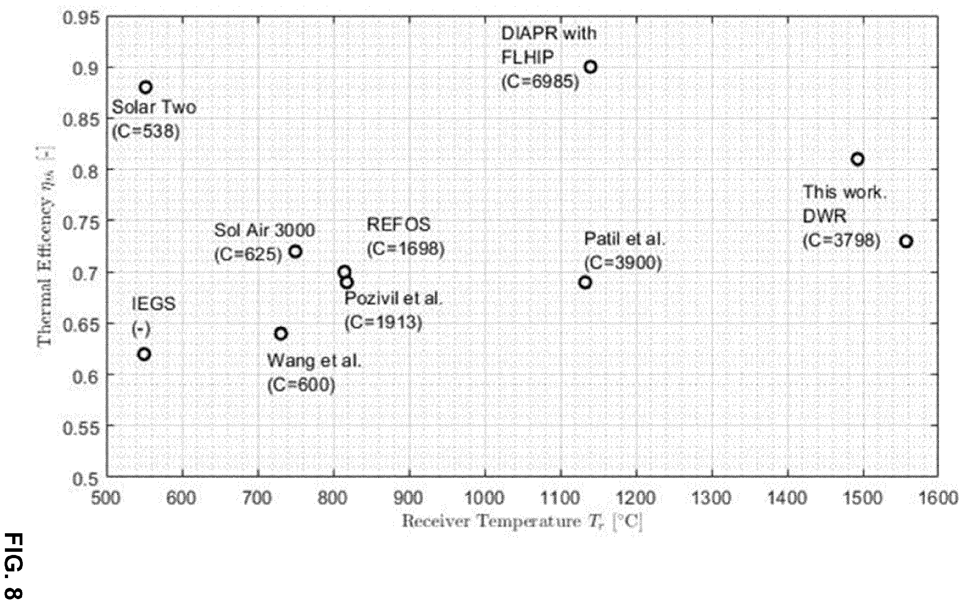

*Table 1. Main characteristics of central solar receivers experimentally demonstrated. The superscript \* indicates that the figure has been estimated and not measured, n/a stands for "not available". The same information is also reported in figure 8.*

| Receiver name | Power input, $Q_{solar}$ (kW) | Concentration ratio, C (-) | Fluid outlet temp., $T_{HTM}^{out}$ (°C) | Thermal efficiency, $\eta_{th}$ (%) |
|---|---|---|---|---|
| Solar Two [17] | n/a | 538 | 552 | 88 |
| ISEGS [19] | n/a | n/a | 550 | 62* |
| Wang et al. [27] | n/a | 600 | 731 | 64 |
| SolAir3000 [24] | n/a | 625 | 750 | 72 |
| REFOS [25] | 410 | 1698 | 815 | 70 |
| Pozivil et al. [26] | 50 | 1000-3000 | 818 | 69 |
| DIAPR [20] | 30-50 | 5000-10000 | 1140 | 90* |
| Patil et al. [22] | 5 | 3000-4000 | 1133 | 69 |
| Synhelion [14] | 200 | n/a | 1500 | n/a |
| Present invention | 1 | 1000-3800 | 1000-1400 | >50 |

The same data are plotted in figure 8, showing the receiver efficiency $\eta_{th}$ Vs the temperature of the delivered fluid $T_{HTM}^{out}$. The first two lines present the reference systems previously referred to as state of the art. The temperature range is below 600°C. Systems with similar performance are currently being deployed in commercial plants worldwide. The Solar Two plant brought the direct molten salt technology to market readiness [17] and is representative of the performance of current commercial concentrated solar power (CSP) plants of this type [6]. The largest solar steam receiver was designed for the *Ivanpah Solar Electric Generating System* (ISEGS) plant[18]. The efficiency of this receiver was estimated to be around 62% [19].

As previously discussed, the range of interest for the solarization of high-T industrial processes is located at temperatures exceeding 1000°C and thermal efficiencies $\eta_{th}$ larger than about 50%. In this region, only two sets of results have been published.

The *Directly-Irradiated Annular Pressurized Receiver* (DIAPR) was developed during the 90's at the Weizmann institute, in Israel. The working fluid is air and the input power during the documented experiments ranged between 30 and 50 kW. However, it should be noted that the power input was not directly measured but estimated by the authors. An efficiency around 90% at 1150°C was reported, which decreased to about 70 % at 1200°C[20]. The key feature of the DIAPR is a frustum-like fused silica window (FLHIP)[21]. Due to its rather complex shape, it is assumed that this component poses serious challenges when it comes to upscaling the receiver. No further developments have been reported for this concept after 2001.

Another successful demonstration was carried out at ETH by Patil and colleagues[22]. Also this solar receiver uses air as the working fluid, which is aspirated from the ambient into the absorbing cavity by maintaining a slightly negative pressure, i.e., below ambient pressure. The tested prototype was designed to have a power input around 5 kW and achieved a measured efficiency of 67 % at air outlet temperature of 1133°C. This configuration allows the great advantage of avoiding a window. The main drawback is related to the fact that the hot air is bound to be delivered at low density, being not pressurized, with an impact on the dimensions and costs of the downstream equipment (e.g., piping and heat exchangers). Recently, the company Synhelion proposed a new approach to the design of solar steam receivers projected to offer high temperatures and performance [13, 14, 23], but no experimental demonstration has been published so far.

The results collected so far for the present invention demonstrated the production of steam at temperatures in the range 1000 - 1400°C with efficiency $\eta_{th}$ > 50%.

Hence, the present invention has the potential of bringing the GHG emissions of cement processing to zero, see figure 6. Using solar energy as the sole energy input avoids the use of fossil fuels, thus avoiding the "energy emissions". By using steam as the heat carrier, the exhaust leaving the kiln are basically a mixture of steam and $CO_2$ only. By lowering the exhaust temperature, the steam can be easily condensed and separated. This allows to obtain a stream of pure $CO_2$ which can be thus easily sequestrated.

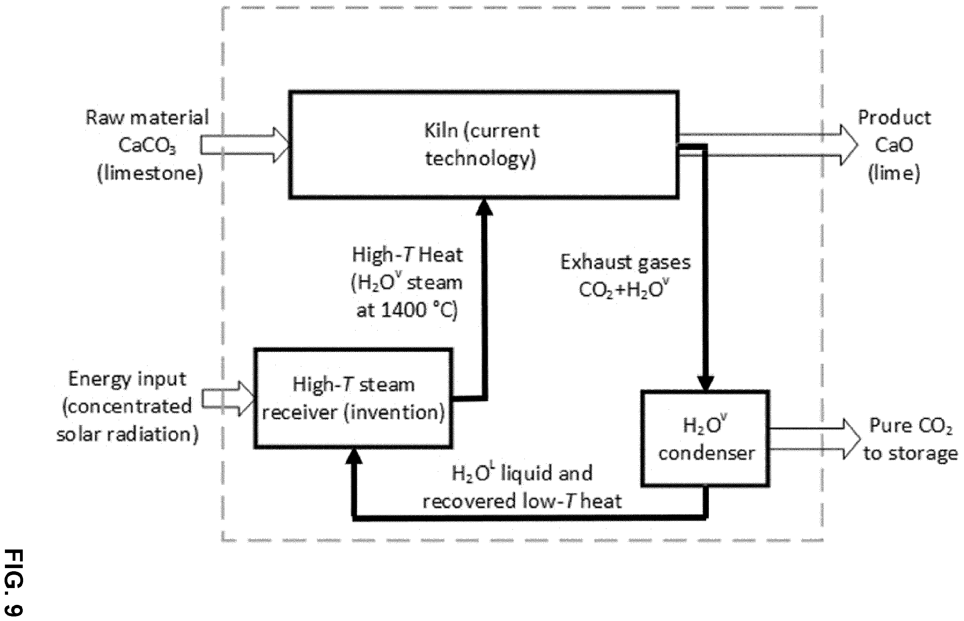

For illustrative purposes only, figure 9 depicts a possible integration of the present invention into the process of cement production to avoid $CO_2$ emissions altogether with in-situ sequestration. The present invention is integrated such that it provides the energy input needed by the reactions occurring in the rotary kiln, i.e., the current state of the art technology for cement production at large scale. This energy is currently provided mainly through the combustion of fossil fuels. This combustion and the associated emissions are therefore avoided in the proposed scheme. Furthermore, the $CO_2$ emission deriving from the reactions, most notably calcination of limestone into lime, can also be effectively avoided by separating the $CO_2$ in the outflow stream by condensation of the accompanying steam.

References

[1] IEA, "Heating," 2022. Available online (last accessed March 2022): https://www.iea.org/reports/heating.

[2] A. Henry, R. Prasher and A. Majumdar, "Five thermal energy grand challenges for decarbonization," Nature Energy, vol. 5, pp. 635-637, 2020.

[3] G. P. Thiel and A. K. Stark, "To decarbonize industry, we must decarbonize heat," Joule, vol. 5, pp. 531-550, 2021.

[4] T. Naegler, S. Simon, M. Klein and H. C. Gils, "Quantification of the European industrial heat demand by branch and temperature level," International Journal of Energy Research, vol. 39, pp. 2019-2030, 2015.

[5] P. Friedlingstein, et. Al., "Global Carbon Budget 2020," Earth System Science Data, vol. 12, pp. 3269-3340, 2020.

[6] C. K. Ho and B. D. Iverson, "Review of high-temperature central receiver designs for concentrating solar power," Renewable and Sustainable Energy Reviews, vol. 29, pp. 835-846, 2014.

[7] C.-J. Winter, R. L. Sizmann and L. L. Vant-Hull, Solar Power Plants. Fundamentals, Technology, Systems, Economics, Springer-Verlag Berlin, Heidelberg, 1991.

[8] C. A. Klein, "High-energy laser windows: Case of fused silica," Optical Engineering, vol. 49, 2010.

[9] C. A. Klein, "Thermal shock resistance of infrared transmitting windows and domes," Optical Engineering, vol. 37, p. 2826 - 2836, 1998.

[10] J. Hertel, R. Uhlig, M. Söhn, C. Schenk, G. Helsch and H. Bornhoft, "Fused silica windows for solar receiver applications," 2016.

[11] R. Buck, "Optical performance of segmented aperture windows for solar tower receivers," 2017.

[12] G. Liang and I. Mudawar, "Review of spray cooling - Part 2: High temperature boiling regimes and quenching applications," International Journal of Heat and Mass Transfer, vol. 115, pp. 1206-1222, 2017.

[13] G. Ambrosetti and P. Good, "A novel approach to high temperature solar receivers with an absorbing gas as heat transfer fluid and reduced radiative losses," Solar Energy, pp. 521-531, 2019.

[14] Patent CH 713 765 A1, 2018.

[15] IEA, "Cement," 2021. Available online (last accessed March 2022): https://www.iea.org/reports/cement.

[16] M. Sedighi, R. V. Padilla, R. A. Taylor, M. Lake, I. Izadgoshasb and A. Rose, "High-temperature, point-focus, pressurised gas-phase solar receivers: A comprehensive review," Energy Conversion and Management, vol. 185, pp. 678-717, 2019.

[17] J. E. e. a. Pacheco, "Final test and evaluation results from the Solar Two project," Albuquerque, 2002.

[18] A. R. Plotkin, "Solar receiver steam generator design for the Ivanpah solar electric generating system," in Proceedings of the ASME 2011 Power Conference, Denver, CO, 2011.

[19] J. Sanz-Bermejo, J. Gonzalez-Aguilar and M. Romero, "Performance Analysis of Direct Steam Generation-Central Receiver Systems," 2012.

[20] A. Kribus, P. Doron, R. Rubin, R. Reuven, E. Taragan, S. Duchan and J. Karni, "{Performance of the Directly-Irradiated Annular Pressurized Receiver ({DIAPR}) Operating at 20 Bar and 1,200 ° C}," Journal of Solar Energy Engineering, vol. 123, pp. 10-17, 11 2001.

[21] J. Karni, A. Kribus, B. Ostraich and E. Kochavi, "A high-pressure window for volumetric solar receivers," Journal of Solar Energy Engineering, Transactions of the ASME, vol. 120, p. 101 - 107, 1998.

[22] V. R. Patil, F. Kiener, A. Grylka and A. Steinfeld, "Experimental of a solar air cavity-receiver with reticulated porous ceramic absorbers for thermal processing at above 1000 °C," Solar Energy, vol. 214, pp. 72-85, 2021.

[23] Synhelion, "Press release. Available online at https://www.solarpaces.org/at-synhelion-solar-jet-fuels-get-ready-for-take-off/ (Last accessed June 2022)," 2020.

[24] F. M. Tellez, M. Romero, P. Heller, A. Valverde, J. F. Reche, S. Ulmer and G. Dibowski, "Thermal performance of "SolAir 3000 kWh" ceramic volumetric solar receiver," in Proceedings of the 11th SolarPACES International Symposium on Concentrated Solar Power and Chemical EnergyTechnologies, 2002.

[25] R. Buck, T. Bräuning, T. Denk, M. Pfänder, P. Schwarzbözl and F. Tellez, "Solar-hybrid gas turbine-based power tower systems (REFOS)," Journal of Solar Energy Engineering, Transactions of the ASME, vol. 124, p. 2 - 9, 2002.

[26] P. Pozivil, N. Ettlin, F. Stucker and A. Steinfeld, "Modular Design and Experimental Testing of a 50 kW_(th) Pressurized-Air Solar Receiver for Gas Turbines," Journal of Solar Energy Engineering, vol. 137, pp. 031002-031002-7, 2015.

[28] P. Wang, J. B. Li, F. W. Bai, D. Y. Liu, C. Xu, L. Zhao and Z. F. Wang, "Experimental and theoretical evaluation on the thermal performance of a windowed volumetric solar receiver," Energy, vol. 119, p. 652 - 661, 2017.

[29] M. Romero and A. Steinfeld, "Concentrating solar thermal power and thermochemical fuels," Energy and Environmental Science, vol. 5, pp. 9234-9245, 2012. W. E. C. Pritzkow, "Pressure loaded volumetric ceramic receiver," Solar Energy Materials, vol. 24, pp. 498-507, 1991.

[30] R. Schäppi, D. Rutz, F. Dähler, A. Muroyama, P. Haueter, J. Lilliestam, A. Patt, P. Furler and A. Steinfeld, "Drop-in fuels from sunlight and air," Nature, vol. 601, pp. 63-68, 2022.

LIST OF REFERENCE SIGNS

| | |
|---|---|
| 1, 1a, 1b | solar receiver |
| 2 | enclosure |
| 3 | cavity |
| 4 | heat transfer fluid |
| 5 | opening |
| 6 | absorber |
| 7 | window |
| 8, 8a, 8b | cooling device |

9           window-cooling liquid fluid
10          liquid layer
11, 11a, 11b   conduit
12          orifice
13          nozzle
14          further conduit
15          interior side
16          cone
17a, 17b    layer
18          inlet region
19          outlet region
20          outlet
21          first end
22          second end

R     solar radiation
L     longitudinal direction
p     plane
e     ejection direction
s     spraying direction
do    distance
d     distance
o     diameter orifice
c     center point
$\alpha$     angle
$\beta$     angle
$\gamma$     angle
$\delta$     angle
n     normal
w     characteristic length
cw    clear width
E     extension direction

**Claims**

1. A solar receiver (1, 1a, 1b) comprising:

   - an enclosure (2) delimiting a cavity (3) that is configured to receive a heat transfer fluid (4),
   - at least one opening (5) in the enclosure (2) for access of solar radiation (R) into the cavity (3),
   - at least one window (7) that seals the opening (5), and
   - at least one cooling device (8, 8a, 8b) that is configured to cool the window (7),

   **characterized in that** the cooling device (8, 8a, 8b) is configured to supply at least one window-cooling liquid fluid (9) to the window (7), such that the window-cooling liquid fluid (9) forms at least one liquid layer (10) on and/or in the window (7).

2. The solar receiver (1) according to claim 1, wherein the cooling device (8) comprises at least one conduit (11) having an orifice (12) for supplying the window-cooling liquid fluid (9) to the window (7), and

   wherein the orifice (12) is configured to eject the window-cooling liquid fluid (9) along an ejection direction (s), and wherein an angle ($\alpha$) being formed between the ejection direction (e) and a normal (n) to the window (7) is between 0° and $\pm$ 90°, and/or
   wherein the orifice (12) is arranged at a distance (do) from the window (7) being in the range of 0 millimeter to 50 millimeter.

3. The solar receiver (1a) according to claim 1 or 2, wherein the cooling device (8a) comprises at least one conduit (11a) having at least one nozzle (13), and

wherein the nozzle (13) is configured to spray the window-cooling liquid fluid (9) onto the window (7) along a spraying direction (s), an angle ($\delta$) between the spraying direction (s) and a normal (n) to the window (7) preferably being in the range of +45° to -45°, and/or

wherein the window (7) defines a characteristic length w, and wherein the nozzle is arranged at a distance d from the window (7) being in the range of $d = \frac{w}{10}$ to d = w, the distance preferably being $d = \frac{w}{4}$ .

4.  The solar receiver (1b) according to any one of the preceding claims, wherein the cooling device (8b) comprises at least one conduit (11b) that extends at least partially within the window (7) and which is configured to supply the window-cooling liquid fluid (9) in the window (7), and
    wherein said conduit (11b) is preferably at least partially an integral part of the window (7).

5.  The solar receiver (1, 1a, 1b) according to any one of the preceding claims, wherein the window (7) is a single-layer window or a multi-layer window, and/or
    wherein the window (7) is at least one of: at least partially gastight, at least partially gas-permeable.

6.  The solar receiver (1, 1a, 1b) according to any one of the preceding claims, wherein the solar receiver (1, 1a, 1b) comprises at least one further conduit (14) for supplying at least one further fluid into the cavity (3), and
    wherein said further fluid preferably at least partially provides the heat transfer fluid (4).

7.  The solar receiver (1, 1a, 1b) according to claim 6, wherein the further conduit (15) is arranged at least partially in the cavity.

8.  An industrial system comprising or consisting of at least one solar receiver (1, 1a, 1b) according to any one of the preceding claims, the industrial system preferably being or comprising a processing system, a chemical reactor or a heat engine.

9.  A method of operating a solar receiver (1, 1a, 1b) according to any one of the preceding claims 1 to 7, wherein the method comprises the step of supplying at least one window-cooling liquid fluid (9) to the window (7) with the cooling device (8, 8a, 8b), such that the window-cooling liquid fluid (9) forms at least one liquid layer (10) on and/or in the window (7).

10. The method according to claim 9, wherein the heat transfer fluid (4) is a reactant fluid that undergoes a chemical reaction and/or a chemical transformation preferably within the cavity (3) of the solar receiver (1, 1a, 1b), or

    wherein the heat transfer fluid (4) is a heat transfer fluid in a thermochemical process, the thermochemical process preferably being an endothermic step in the production of fuels, cement, metals, or metallic compounds, or
    wherein the heat transfer fluid (4) is a working fluid for a heat engine or that the heat transfer fluid delivers heat to the working fluid.

11. The method according to claim 9 or 10, wherein the window-cooling liquid fluid (9) at least partially provides the heat transfer fluid (4).

12. The method according to any one of claims 9 to 11, wherein at least one further fluid is supplied into the cavity (3) via the at least one further conduit 14(), and

    wherein the further fluid at least partially provides the heat transfer fluid (4), and/or
    wherein the window-cooling liquid fluid (9) and the further fluid are the same or different from one another.

13. The method according to any one of claims 9 to 12, wherein the window-cooling liquid fluid (9) and/or the further fluid and/or the heat transfer fluid (4) are at least one of:

    - transparent to thermal radiation and preferably having a high transmittance to solar radiation in the visible spectral range and a lower transmittance to solar radiation of longer wavelengths, or
    - at least one of water, $CO_2$, $NH_3$, $CH_4$, or combinations thereof.

**14.** The method according to any one of claims 9 to 13, wherein a negative or a positive pressure is generated in the cavity (3), and/or
wherein a pressure inside the cavity (3) is in the range of 0.01 bar absolute to 100 bar absolute.

**15.** The method according to any one of claims 9 to 14, wherein at least one of the window-cooling liquid fluid (9), the further fluid or the heat transfer fluid (4) are heated up to 1500 °C or more, preferably up to 2000 °C or more within the cavity (3) by the solar radiation.

FIG. 1

**FIG. 2a**

**FIG. 2b**

FIG. 3

FIG. 4

**FIG. 5**

FIG. 6

FIG. 7

FIG. 8

FIG. 9

Europäisches
Patentamt

European
Patent Office

Office européen
des brevets

# EUROPEAN SEARCH REPORT

Application Number

EP 22 19 8281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/174866 A1 (ZHANG YAOMING [CN]) 10 August 2006 (2006-08-10) | 1,4-7 | INV. F24S20/20 |
| Y | * the whole document * | 9,11-15 | F24S80/50 F24S40/55 |
| X | US 5 421 322 A (KARNI JACOB [IL] ET AL) 6 June 1995 (1995-06-06) | 1-3,5-8 | |
| Y | * the whole document * | 9-15 | |
| Y | US 4 164 123 A (SMITH OTTO J M [US]) 14 August 1979 (1979-08-14) * the whole document * | 9-15 | |
| A | US 4 472 367 A (GIBSON JAMES O [US] ET AL) 18 September 1984 (1984-09-18) * the whole document * | 1-15 | |
| A | WO 2012/083097 A2 (UNIV DELAWARE [US]; ETH ZUERICH [CH] ET AL.) 21 June 2012 (2012-06-21) * the whole document * | 1-15 | |
| A | DE 100 20 322 A1 (DEUTSCH ZENTR LUFT & RAUMFAHRT [DE]) 15 November 2001 (2001-11-15) * the whole document * | 1-15 | TECHNICAL FIELDS SEARCHED (IPC) F24S |
| A | CN 102 353 153 B (UNIV HUNAN) 12 September 2012 (2012-09-12) * abstract; figures * | 1-15 | |

-/--

The present search report has been drawn up for all claims

| Place of search | Date of completion of the search | Examiner |
|---|---|---|
| The Hague | 14 February 2023 | Van Dooren, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 22 19 8281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Z'GRAGGEN A ET AL: "Hydrogen production by steam-gasification of petroleum coke using concentrated solar power-II Reactor design, testing, and modeling", INTERNATIONAL JOURNAL OF HYDROGEN ENERGY, ELSEVIER, AMSTERDAM, NL, vol. 31, no. 6, 1 May 2006 (2006-05-01), pages 797-811, XP024900039, ISSN: 0360-3199, DOI: 10.1016/J.IJHYDENE.2005.06.011 [retrieved on 2006-05-01] * the whole document * | 1-15 | |
| A | US 2014/326235 A1 (KLEIN HANNA H [IL] ET AL) 6 November 2014 (2014-11-06) * the whole document * | 1-15 | |
| A | US 2022/090825 A1 (AMBROSETTI GIANLUCA [CH] ET AL) 24 March 2022 (2022-03-24) * the whole document * | 1-15 | |
| A | DE 10 2011 004280 A1 (SIEMENS AG [DE]) 23 August 2012 (2012-08-23) * the whole document * | 1-15 | TECHNICAL FIELDS SEARCHED (IPC) |
| A | US 2010/206298 A1 (KARNI JACOB [IL]) 19 August 2010 (2010-08-19) * the whole document * | 1-15 | |
| A | CH 706 970 A1 (BECH ULRICH [MT]) 14 March 2014 (2014-03-14) * the whole document * | 1-15 | |
| A | US 6 415 783 B1 (HARRISON JOHN [GB]) 9 July 2002 (2002-07-09) * the whole document * | 1-15 | |
|  | -/-- | | |

The present search report has been drawn up for all claims

| Place of search | Date of completion of the search | Examiner |
|---|---|---|
| The Hague | 14 February 2023 | Van Dooren, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

EP 4 345 399 A1

Europäisches
Patentamt

European
Patent Office

Office européen
des brevets

# EUROPEAN SEARCH REPORT

Application Number

EP 22 19 8281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/127791 A1 (SYNHELION SA [CH]) 1 July 2021 (2021-07-01) * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 14 February 2023 | Van Dooren, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 8281

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2023

| Patent document cited in search report | | Publication date | Patent family member(s) | | Publication date |
|---|---|---|---|---|---|
| US 2006174866 | A1 | 10-08-2006 | NONE | | |
| US 5421322 | A | 06-06-1995 | NONE | | |
| US 4164123 | A | 14-08-1979 | NONE | | |
| US 4472367 | A | 18-09-1984 | NONE | | |
| WO 2012083097 | A2 | 21-06-2012 | NONE | | |
| DE 10020322 | A1 | 15-11-2001 | NONE | | |
| CN 102353153 | B | 12-09-2012 | NONE | | |
| US 2014326235 | A1 | 06-11-2014 | CN | 104114958 A | 22-10-2014 |
| | | | US | 2014326235 A1 | 06-11-2014 |
| | | | WO | 2013093729 A1 | 27-06-2013 |
| US 2022090825 | A1 | 24-03-2022 | AU | 2018266741 A1 | 21-11-2019 |
| | | | CH | 713765 A1 | 15-11-2018 |
| | | | CH | 713773 A2 | 15-11-2018 |
| | | | CL | 2019003147 A1 | 08-05-2020 |
| | | | CN | 110720017 A | 21-01-2020 |
| | | | EP | 3622227 A1 | 18-03-2020 |
| | | | MA | 49301 A | 07-05-2018 |
| | | | MA | 50762 A | 18-03-2020 |
| | | | US | 2022090825 A1 | 24-03-2022 |
| DE 102011004280 | A1 | 23-08-2012 | DE | 102011004280 A1 | 23-08-2012 |
| | | | WO | 2012110330 A2 | 23-08-2012 |
| US 2010206298 | A1 | 19-08-2010 | US | 2010206298 A1 | 19-08-2010 |
| | | | WO | 2009027986 A2 | 05-03-2009 |
| CH 706970 | A1 | 14-03-2014 | CH | 706970 A1 | 14-03-2014 |
| | | | WO | 2014037582 A2 | 13-03-2014 |
| US 6415783 | B1 | 09-07-2002 | AT | 248332 T | 15-09-2003 |
| | | | AU | 767937 B2 | 27-11-2003 |
| | | | EP | 1114284 A1 | 11-07-2001 |
| | | | ES | 2207280 T3 | 16-05-2004 |
| | | | MX | PA01002338 A | 08-05-2002 |
| | | | PT | 1114284 E | 30-01-2004 |
| | | | US | 6415783 B1 | 09-07-2002 |
| | | | WO | 0014457 A1 | 16-03-2000 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 22 19 8281

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2023

| Patent document cited in search report | Publication date | Patent family member(s) | | Publication date |
|---|---|---|---|---|
| WO 2021127791 A1 | 01-07-2021 | AU | 2020412969 A1 | 16-06-2022 |
| | | CH | 716993 A2 | 30-06-2021 |
| | | CN | 115038914 A | 09-09-2022 |
| | | EP | 4081743 A1 | 02-11-2022 |
| | | US | 2023021446 A1 | 26-01-2023 |
| | | WO | 2021127791 A1 | 01-07-2021 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 713765 A1

**Non-patent literature cited in the description**

- Heating. *IEA,* 2022, https://www.iea.org/reports/heating
- **A. HENRY ; R. PRASHER ; A. MAJUMDAR.** Five thermal energy grand challenges for decarbonization. *Nature Energy,* 2020, vol. 5, 635-637
- **G. P. THIEL ; A. K. STARK.** To decarbonize industry, we must decarbonize heat. *Joule,* 2021, vol. 5, 531-550
- **T. NAEGLER ; S. SIMON ; M. KLEIN ; H. C. GILS.** Quantification of the European industrial heat demand by branch and temperature level. *International Journal of Energy Research,* 2015, vol. 39, 2019-2030
- **P. FRIEDLINGSTEIN.** Global Carbon Budget 2020. *Earth System Science Data,* 2020, vol. 12, 3269-3340
- **C. K. HO ; B. D. IVERSON.** Review of high-temperature central receiver designs for concentrating solar power. *Renewable and Sustainable Energy Reviews,* 2014, vol. 29, 835-846
- Solar Power Plants. **C.-J. WINTER ; R. L. SIZMANN ; L. L. VANT-HULL.** Fundamentals, Technology, Systems, Economics. Springer-Verlag, 1991
- **C. A. KLEIN.** High-energy laser windows: Case of fused silica. *Optical Engineering,* 2010, vol. 49
- **C. A. KLEIN.** Thermal shock resistance of infrared transmitting windows and domes. *Optical Engineering,* 1998, vol. 37, 2826-2836
- **J. HERTEL ; R. UHLIG ; M. SÖHN ; C. SCHENK ; G. HELSCH ; H. BORNHOFT.** *Fused silica windows for solar receiver applications,* 2016
- **R. BUCK.** *Optical performance of segmented aperture windows for solar tower receivers,* 2017
- **G. LIANG ; I. MUDAWAR.** Review of spray cooling - Part 2: High temperature boiling regimes and quenching applications. *International Journal of Heat and Mass Transfer,* 2017, vol. 115, 1206-1222
- **G. AMBROSETTI ; P. GOOD.** A novel approach to high temperature solar receivers with an absorbing gas as heat transfer fluid and reduced radiative losses. *Solar Energy,* 2019, 521-531
- Cement. *IEA,* 2021, https://www.iea.org/reports/cement

- **M. SEDIGHI ; R. V. PADILLA ; R. A. TAYLOR ; M. LAKE ; I. IZADGOSHASB ; A. ROSE.** High-temperature, point-focus, pressurised gas-phase solar receivers: A comprehensive review. *Energy Conversion and Management,* 2019, vol. 185, 678-717
- **J. E. E. A. PACHECO.** Final test and evaluation results from the Solar Two project. *Albuquerque,* 2002
- **A. R. PLOTKIN.** Solar receiver steam generator design for the Ivanpah solar electric generating system. *Proceedings of the ASME 2011 Power Conference, Denver, CO,* 2011
- **J. SANZ-BERMEJO ; J. GONZALEZ-AGUILAR ; M. ROMERO.** *Performance Analysis of Direct Steam Generation-Central Receiver Systems,* 2012
- **A. KRIBUS ; P. DORON ; R. RUBIN ; R. REUVEN ; E. TARAGAN ; S. DUCHAN ; J. KARNI.** Performance of the Directly-Irradiated Annular Pressurized Receiver ({DIAPR}) Operating at 20 Bar and 1,200 ° C. *Journal of Solar Energy Engineering,* November 2001, vol. 123, 10-17
- **J. KARNI ; A. KRIBUS ; B. OSTRAICH ; E. KOCHAVI.** A high-pressure window for volumetric solar receivers. *Journal of Solar Energy Engineering, Transactions of the ASME,* 1998, vol. 120, 101-107
- **V. R. PATIL ; F. KIENER ; A. GRYLKA ; A. STEINFELD.** Experimental of a solar air cavity-receiver with reticulated porous ceramic absorbers for thermal processing at above 1000 °C. *Solar Energy,* 2021, vol. 214, 72-85
- *Press release. Available online at https://www.solarpaces.org/at-synhelion-solar-jet-fuels-get-ready-for-take-off/ (Last accessed June 2022),* 2020
- **F. M. TELLEZ ; M. ROMERO ; P. HELLER ; A. VALVERDE ; J. F. RECHE ; S. ULMER ; G. DIBOWSKI.** Thermal performance of ''SolAir 3000 kWh'' ceramic volumetric solar receiver. *Proceedings of the 11th SolarPACES International Symposium on Concentrated Solar Power and Chemical Energy Technologies,* 2002

- **R. BUCK ; T. BRÄUNING ; T. DENK ; M. PFÄNDER ; P. SCHWARZBÖZL ; F. TELLEZ.** Solar-hybrid gas turbine-based power tower systems (REFOS). *Journal of Solar Energy Engineering, Transactions of the ASME,* 2002, vol. 124, 2-9
- **P. POZIVIL ; N. ETTLIN ; F. STUCKER ; A. STEINFELD.** Modular Design and Experimental Testing of a 50 kW_(th) Pressurized-Air Solar Receiver for Gas Turbines. *Journal of Solar Energy Engineering,* 2015, vol. 137, 031002-031002, 7
- **P. WANG ; J. B. LI ; F. W. BAI ; D. Y. LIU ; C. XU ; L. ZHAO ; Z. F. WANG.** Experimental and theoretical evaluation on the thermal performance of a windowed volumetric solar receiver. *Energy,* 2017, vol. 119, 652-661
- **M. ROMERO ; A. STEINFELD.** Concentrating solar thermal power and thermochemical fuels. *Energy and Environmental Science,* 2012, vol. 5, 9234-9245
- **W. E. C. PRITZKOW.** Pressure loaded volumetric ceramic receiver. *Solar Energy Materials,* 1991, vol. 24, 498-507
- **R. SCHÄPPI ; D. RUTZ ; F. DÄHLER ; A. MUROYAMA ; P. HAUETER ; J. LILLIESTAM ; A. PATT ; P. FURLER ; A. STEINFELD.** Drop-in fuels from sunlight and air. *Nature,* 2022, vol. 601, 63-68